# EUROPEAN PATENT APPLICATION

(11) **EP 4 432 226 A1**
(43) Date of publication of application: **18.09.2024**
(21) Application number: 24158532.2
(22) Date of filing: 20.02.2024
(51) Int. Cl.: G06T 7/246

(54) **SYSTEMS AND METHODS FOR SINGLE-OBJECT TRACKING USING MULTIPLE-OBJECT TRACKING**

(30) Priority: 13.03.2023 US 202363451776 P
(71) Applicant: Palantir Technologies Inc., Denver, CO 80202 (US)
(72) Inventor: PATSEKIN, Aleksandr, Denver, 80202 (US); RADFORD, Ben, Denver, 80202 (US); DERWIN, Cameron, Denver, 80202 (US); MARASCO, Daniel, Denver, 80202 (US); WANG, Di, Denver, 80202 (US); LYMPEROPOULOS, Dimitrios, Denver, 80202 (US); KANG, Elliot, Denver, 80202 (US); KIM, Keun Jae, Denver, 80202 (US); BETTEN, Matthew, Denver, 80202 (US); FEDDERLY, Matthew, Denver, 80202 (US); GORACZKO, Michel, Denver, 80202 (US); LEI, Peng, Denver, 80202 (US); SRIKHANTA, Prasanna, Denver, 80202 (US); LALONDE, Rodney, Denver, 80202 (US); FACKLER, Steven, Denver, 80202 (US); SHEN, Tong, Denver, 80202 (US); LI, Xin, Denver, 80202 (US); WU, Yue, Denver, 80202 (US)
(74) Representative: Sayer, Robert David

(57) **Abstract**

In some examples, systems and methods for object tracking are provided. For example, a method includes: receiving an image frame in a sequence of image frames; identifying an object of interest in the image frame using a single-obj ect tracker (SOT) based upon one or more templates associated with the object of interest in a template repository; generating a SOT output based on the identified object of interest; and detecting one or more objects in the image frame using a multiple-object tracker (MOT). In some examples, the MOT including a machine-learning model. In some examples, the method further includes conducting a matching between the SOT output and each detected object of the one or more detected objects to generate a match result; and generating a tracker output based at least in part on the SOT output, the one or more detected objects, and the match result.

## Description

### CROSS REFERENCE TO RELATED APPLICATIONS

This application claims priority to U.S. Provisional Application No. 63/451,776, entitled "SYSTEMS AND METHODS FOR SINGLE-OBJECT TRACKING USING MULTIPLE-OBJECT TRACKING," and filed on March 13, 2023.

### TECHNICAL FIELD

Certain embodiments of the present disclosure relate to object tracking. More particularly, some embodiments of the present disclosure relate to multiple object tracking (MOT) and single object tracking (SOT).

### BACKGROUND

There are two major computer vision based object tracking models: MOT and SOT. Often, MOT models require training a detector with predefined classes and the tracking detected objects of predefined classes across frames of a video. Comparatively, often SOT models do not require a separately trained object detector, but instead can be designed to track any generic object by drawing a bounding box around the target of interest.

However, both MOT models and SOT models have their own disadvantages. For example, referring to MOT models, tracking all objects can be distracting for users when a user only wants to focus on one or a few targets, MOT models require training a detector for predefined classes, and MOT models often cannot handle new classes. Further, SOT models typically suffer from distractors, which are either similar looking objects near the target or backgrounds, and SOT models often can only track one target specified by the user, while having limited spatial and temporal context about other targets.

Hence, it is desirable to improve techniques for object tracking.

### SUMMARY

Certain embodiments of the present disclosure relate to object tracking. More particularly, some embodiments of the present disclosure relate to multiple object tracking (MOT) and single object tracking (SOT).

At least some aspects of the present disclosure are directed to a method for object tracking. The method includes: receiving an image frame in a sequence of image frames; identifying an object of interest in the image frame using a single-obj ect tracker (SOT) based upon one or more templates associated with the object of interest in a template repository; generating a SOT output based on the identified object of interest; detecting one or more objects in the image frame using a multiple-object tracker (MOT), the MOT including a machine-learning model; conducting a matching between the SOT output and each detected object of the one or more detected objects to generate a match result; and generating a tracker output based at least in part on the SOT output, the one or more detected objects, and the match result; wherein the method is performed using one or more processors.

At least some aspects of the present disclosure are directed to a system for object tracking. The system includes at least one processor and at least one memory storing instructions that, when executed by the at least one processor, causes the system to perform a set of operations. The set of operations include: receiving an image frame in a sequence of image frames; identifying an object of interest in the image frame using a single-object tracker (SOT) based upon one or more templates associated with the object of interest in a template repository; generating a SOT output based on the identified object of interest; detecting one or more objects in the image frame using a multiple-object tracker (MOT), the MOT including a machine-learning model; conducting a matching between the SOT output and each detected object of the one or more detected objects to generate a match result; and generating a tracker output based at least in part on the SOT output, the one or more detected objects, and the match result.

At least some aspects of the present disclosure are directed to a method for object tracking. The method includes: receiving an image frame in a sequence of image frames; identifying an object of interest in the image frame using a single-obj ect tracker (SOT) based upon one or more templates associated with the object of interest in a template repository; generating a SOT output based on the identified object of interest; detecting one or more objects in the image frame using a multiple-object tracker (MOT); and conducting a matching between the SOT output and each detected object of the one or more detected objects to generate a match result. In some embodiments, the conducting a matching includes: determining an intersection of union (IOU) between the SOT output and each detected object of the one or more detected objects; determining whether the IOU is lower than an IOU threshold; and identifying a detected object of the one or more detected objects with a corresponding IOU lower than the IOU threshold. In some embodiments, the method further includes generating a tracker output based at least in part on the SOT output, the one or more detected objects, and the match result, wherein the method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is an illustrative example of an object detection system or workflow, according to certain embodiments of the present disclosure
Figure 2A is an illustrative example of a method for object tracking, according to certain embodiments of the present disclosure.
Figure 2B is an illustrative example of a method for object tracking, according to certain embodiments of the present disclosure.
Figure 3 is a simplified diagram showing a method for object tracking according to certain embodiments of the present disclosure.
Figure 4 illustrates a simplified diagram showing a computing system for object tracking, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods for object tracking often include one of two major computer vision based object tracking models: multiple object tracking (MOT) or single object tracking (SOT). However, MOT models and SOT models each have their own disadvantages when used independently in conventional systems. For example, referring to MOT models, tracking all objects can be distracting for users when a user only wants to focus on one or a few targets, MOT models often require training a detector for predefined classes, and MOT models often cannot handle new classes. Further, SOT models typically suffer from distractors, which are either similar looking objects near the target or backgrounds, and SOT models often can only track one target specified by the user, while having limited spatial and temporal context about other targets. The MOT and SOT models each have advantages as well, discussed in further details later herein; however, advantages from both cannot be simultaneously realized via conventional systems and methods because, typically, only one of the two models (i.e., exclusively the MOT model or the SOT model) is used.

Various embodiments of the present disclosure can achieve benefits and/or improvements by a computing system. For example, to address the limitations of SOT models, mechanisms provided herein integrate MOT models into SOT model pipelines to combine the advantages of both tracking models, while overcoming disadvantages of being distracted and/or requiring MOT models for a known class. For example, mechanisms provided herein can identify an object of interest in an image frame using an SOT, such as using one or more templates associated with the object of interest in a template repository, to generate an SOT output. Some examples further include detecting one or more objects in the image frame using an MOT, and then conducting a matching between the SOT output and each detected object of the one or more detected objects to generate a match result. In some examples, a tracker output can then be generated based at least in part on the SOT output, the one or more detected objects (e.g., using the MOT), and the match result (e.g., between the SOT output and each detected object of the MOT).

At least some embodiments of the present disclosure are directed to object tracking for one or more images, a sequence of images, and/or a video. In certain embodiments, an object tracking system (e.g., an object tracking software, an object tracking platform, etc.) uses a template for object detection. In some embodiments, the object tracking system uses outputs from one or more object detecting models and/or one or more user inputs to generate and/or update a template for an object of interest (e.g., a target of interest). In certain embodiments, a template refers to an image and/or one or more features extracted from the image. In some embodiments, a template is associated with an object of interest. In certain embodiments, the image of the template is a portion of a captured image (e.g., a frame, a still image, a sequence of images, a video). In some embodiments, a frame, also referred to as an image frame, is an image in a sequence of images or an image in a video. In some examples, the frame may be received from an image sensor (e.g., a still camera, a video camera, and/or a satellite).

According to certain embodiments, computer vision based object tracking is a technology to detect and track objects of interest by detecting objects, assigning an identifier (ID) to each object and maintaining their IDs throughout a video or a sequence of images. In some examples, object tracking has been applied in self-driving, retail, and other industries.

According to certain embodiments, the systems and methods of object tracking use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, there are two major types of computer vision-based object tracking models (e.g., object tracking paradigms): (i) multiple object tracking (MOT) and (ii) single object tracking (SOT). In certain embodiments, the MOT model requires first training a detector with predefined classes and then tracking/associating detected objects of predefined classes across frames of a video. In certain embodiments, the MOT model consists of jointly training an object detector with predefined classes and a multiple object tracker to detect and track objects across frames of a video. In some embodiments, the SOT model does not require a separately trained object detector. In certain embodiments, the SOT model is designed to track an object (e.g., any generic object) by drawing a bounding box around the target of interest (e.g., an object of interest).

According to certain embodiments, the MOT and SOT have their own advantages and disadvantages. In some embodiments, the MOT can track all objects of interests of the entire image which has more spatial and temporal context. In certain embodiments, the MOT can depend on a pretrained detector and can be less dependent on previous frame tracking results, such that it has less chance of drifting. In some embodiments, the MOT can track all objects which can also be a distraction for users when a user only wants to focus on one or a few targets. In certain embodiments, the MOT needs to train a detector for predefined classes of objects, and may suffer from domain gap, such as new dataset, new environment. In some embodiments, the MOT can't handle new classes of objects.

According to some embodiments, the SOT allows a user to draw a bounding box around the target to specify what object to be tracked, such that SOT can track any object, instead of a predefined class of object. In certain embodiments, the SOT allows online update to learn the object appearance change on the fly, which can track better to different environments and datasets. In some embodiments, the SOT may search only the area near the target instead of the entire image, it may be faster than the MOT, for example, take less runtime to detect the object. In certain embodiments, the SOT may suffer from distractors that are either similar looking objects near the target or backgrounds. In some embodiments, the SOT only tracks one target specified by the user, such that it has limited spatial and temporal context about other targets.

According to certain embodiments, to address the limitation of SOT, an object tracking system integrates an MOT into SOT to combine the advantages of both tracking models. Additionally, in some embodiments, instead of using MOT for the entire image, the object tracking system only applies MOT in the search region for the target identified by the SOT, also referred to as the region MOT. In certain embodiments, the object tracking system can train a class-agnostic and/or generic object detector for local MOT and incorporate the SOT with the region MOT.

According to some embodiments, the SOT, the MOT, and/or the region MOT use one or more computing models. In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

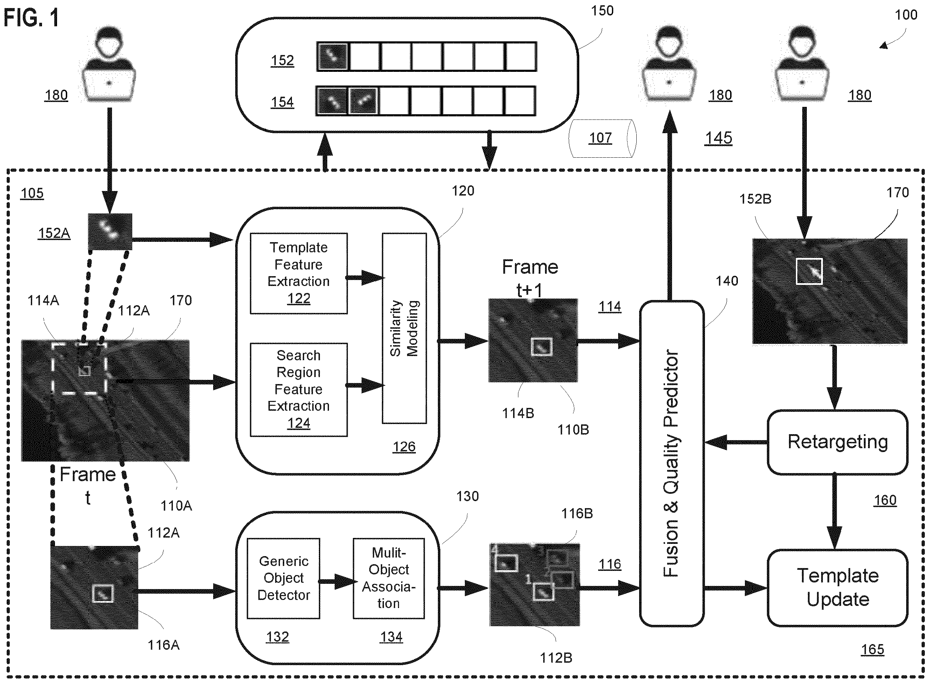

Figure 1 is an illustrative example of an object tracking system or workflow 100, according to certain embodiments of the present disclosure. Figure 1 is merely an example. One of ordinary skill in the art would recognize many variations, alternatives, and modifications. According to some embodiments, the object tracking system includes a single object tracker (SOT) 120 (e.g., a SOT tracker, a single object tracking module, a SOT software module), a multiple-object tracker (MOT) 130 (e.g., a MOT tracker, a multiple-object tracking module, a MOT software module), a fusion and quality predictor 140, a template repository 150, a retargeting module 160, a template update module 165, and a user interface 170 that allows users 180 to interact with the system 100. In certain embodiments, the SOT tracker 120, the MOT tracker 130, the fusion and quality predictor 140, the retargeting module 160, and/or the template update module 165 are integrated into a piece of software 105. In some embodiments, the object tracking system 100 includes a storage repository 107, for example, including the template repository 150.

According to some embodiments, the object tracking system 100 differentiates user identified templates (e.g., user provided templates) and algorithm and/or model derived and/or estimated templates. In certain embodiments, the object tracking system 100 includes two or more types of templates. In some embodiments, a type of templates includes templates generated based on user inputs, also referred to as long-term templates. In certain embodiments, a type of templates includes algorithm and/or model derived and/or estimated templates, or templates generated based on model outputs, also referred to as short-term templates.

In some embodiments, the users 180 can be prompted to provide feedback to the object tracking system 100, such as to generate the templates. In some embodiments, the users 180 can be prompted to provide feedback at regular intervals. In some embodiments, the users 180 can be prompted to provide feedback at irregular intervals. In some embodiments, the users 180 can provide feedback without being prompted (e.g., between adjacent prompting instances, before a prompting instance has occurred, and/or after a prompting instance has occurred).

In some embodiments, the object tracking system 100 includes two or more template repositories (e.g., template galleries), for example, a long-term template repository 152 and a short-term template repository 154. In some embodiments, the long-term template repository (e.g., long term gallery) 152 is configured to store user provided initial template and retargeting templates. In certain embodiments, the short-term template repository (e.g., short term gallery) 154 is configured to store estimated and/or inferred templates with high confidence generated from a detector model (e.g., the SOT module 120, the MOT module 130, etc.).

According to certain embodiments, the object tracking system 100 includes an initialization process. In some embodiments, when a user provides an initial bounding box around an object of interest (e.g., the target) or the initial bounding box indicating an SOT identified object (e.g., shown with an indicator), the object tracking system initializes and/or configures the SOT tracker 120. In certain embodiments, when the initial bounding box is provided, in addition to initializing the SOT tracker, the object objecting system 100 initializes and/or configures the MOT tracker 130 with a track ID (identifier) (e.g., track ID = 1) assigned if there is a detected object (e.g., a detected box represented by a detection box) from MOT matched with the initial bounding box. In certain embodiments, the bounding box is a closed shape. In some examples, the bounding box may be a square, or a circle, or a triangle, or any other regular polygon which should be recognized by those of ordinary skill in the art. In some examples, the bounding box may be an irregular polygon, as should be recognized by those of ordinary skill in the art.

In some embodiments, a match is found when two boxes, such as a bounding box representing a detected object by the SOT tracker 120 and a detection box representing a detected object by the MOT tracker 130, are within a certain IOU (intersection of union) threshold. In certain embodiments, the IOU threshold is a predetermined IOU threshold. In certain embodiments, an IOU quantifies the extent of overlap of two boxes (e.g., two regions). In some embodiments, the IOU is higher when the region of overlap is greater. In certain embodiments, a match is found if a number of feature similarity is above a threshold. In certain embodiments, a match is found if a number of feature similarity is below and/or equal to a threshold.

In some embodiments, the system 100 generates an initial template 152A based on the user input and adds the initial template to the template repository 150 and/or the long-term template repository 152. In certain embodiments, the object tracking system 100 initializes the SOT tracker 120 using the initial template 152A. In some embodiments, the object tracking system 100 initializes the MOT tracker 130 (e.g., a region MOT tracker). In certain embodiments, the object tracking system 100 initializes the MOT tracker 130 with a track ID (identifier) assigned (e.g., the initial track ID) corresponding to an object of interest if there is a detection from the MOT tracker 130 matched with the initial template. In some embodiments, the MOT tracker 130 and/or the MOT tracks (with different track IDs) are initialized and/or configured based on certain number of consecutive detections and/or associations of the same objects. In certain embodiments, each of the identified objects by the MOT tracker 130 has a track ID. In some embodiments, each identified object by the MOT tracker 130 across different frames and associated with a same object is assigned with the same track ID. For example, the track ID for the object of interest remains the same (e.g., the initial track ID) across multiple image frames.

In certain embodiments, the SOT tracker 120 generates the SOT output 114 associated with the object of interest (e.g., the target, the target of interest), for example, a detected region associated with the object of interest, a bounding box associated with the object of interest, and/or the like. In some embodiments, the MOT tracker 130 processes an image frame (e.g., the image frame 110A, the image frame 110B) and/or an image region in the image frame to generate the MOT output 116, for example, one or more detected objects, one or more bounding boxes (e.g., detection boxes) associated with the one or more detected objects. In some embodiments, the image frames 110A, 110B are received from one or more image sensors (e.g., one or more still cameras, video cameras, and/or satellites).

In certain embodiments, the MOT tracker 130, also referred to as the region MOT tracker 130, processes an image region 112A related to the identified object of interest 114A by the SOT tracker 120. In some embodiments, the MOT tracker 130 detects and/or identifies one or more objects, including the identified object 116A in the frame 112A and the one or more objects 116B in the search region 112B, which is a part of the frame 110B.

According to some embodiments, the SOT tracker 120 includes a template feature extraction model 122, search region feature extraction model 124, and/or similarity model 126. In certain embodiments, the template feature extraction model 122 can extract features (e.g., target characteristics) from one or more templates. In some embodiments, the template feature extraction model 122 can extract embeddings, also referred to as low-dimensional representations (e.g., vectors) from the one or more templates. In some embodiments, the template feature extraction model 122 can extract features and/or embeddings from the one or more templates. In some embodiments, extracted features are the same as extracted embeddings. In certain embodiments, extracted features are represented by embeddings (e.g., vector representations).

In certain embodiments, the search region feature extraction model 124 can extract features (e.g., target characteristics, background characteristics) from the one or more templates within a search region. In some embodiments, a search region is a region of a certain size (e.g., with 100 square meters) containing an identified target of interest. In certain embodiments, the search region is in a pixel space. In certain embodiments, the search region is relative to the size of the one or more template (e.g., 5 times the template bounding box size, such as 50 pixel x 50 pixel if the template bounding box size is 10 pixel x 10 pixel). In certain embodiments, a search region is a region of a certain size (e.g., with 100 square meters) with the identified target of interest at the center. In some embodiments, the search region feature extraction model 124 can extract embeddings from the one or more templates. In some embodiments, the search region feature extraction model 124 can extract features and/or embeddings from the one or more templates. In some embodiments, extracted features are the same as extracted embeddings. In certain embodiments, extracted features are represented by embeddings (e.g., vector representations).

In certain embodiments, the SOT tracker 120 and/or the similarity model 126 determines one or more similarities (e.g., similarity metrics) between a template and a detected object. In some embodiments, the SOT tracker 120 and/or the similarity model 126 determines a similarity metric (e.g., a distance) between the template and a detected object. In certain embodiments, the SOT tracker 120 and/or the similarity model 126 determines the similarity metric using a similarity machine-learning model, for example, a regression similarity learning model, a classification similarity learning model, a ranking similarity learning model, an appearance model, and/or the like. In some embodiments, the SOT tracker 120 and/or the similarity model 126 determines the similarity metric between the template and a detected object using a Siamese neural network and/or the like. In certain embodiments, the SOT tracker 120 and/or the similarity model 126 determines a similarity distance between the template and a detected object.

In some embodiments, the SOT tracker 120 can use a motion model to predict a search region in a subsequent image frame (e.g., the image frame 110B). In certain embodiments, the SOT tracker 120 and/or the similarity model 126 can detect an object of interest 114 (e.g., finding a matching bounding box) using one or more templates in the template repository 150.

In certain embodiments, the similarity model 126 can output embeddings extracted from an image and a template and/or extracted features. In some embodiments, the similarity model 126 uses a template matching model to identify and/or locate an object of interest in the input image. In certain embodiments, the similarity model 126 includes one or more template matching models.

According to certain embodiments, the MOT tracker 130 includes a generic object detector 132 and a multi-object association module 134. In some embodiments, the generic object detector 132 is trained to identify generic objects, for example, objects of multiple classes. In certain embodiments, the multi-object association module 134 can produce associations between detections (e.g., detected objects). In some embodiments, the multi-object association module 134 can determine associations of objects between frames (e.g., image frames).

According to some embodiments, the SOT tracker 120 predicts and/or generates an identified object 114B, also referred to as the SOT output 114B, for the image frame 110B. In certain embodiments, the image frame 110B is subsequent to or after the frame 110A. In some embodiments, the MOT tracker 130 identifies one or more objects 116B in the frame 110B. In certain embodiments, the identified object 114B matches to one of the one or more objects 116B.

In certain embodiments, the MOT tracker 130 may run at a reduced frequency (e.g., every 5 or 10 frames) and/or run on demand, for example, to improve runtime efficiency. In some embodiments, the region MOT tracker 130 may be triggered by one or more conditions (e.g., a demand). In certain embodiments, the one or more conditions include, for example, when retargeting is triggered, when the confidence score corresponding the SOT output 114 is low, when the movement between the current SOT output (e.g., the SOT output 114B) and the previous SOT output (e.g., the SOT output 114A) is large, and/or the like.

In some embodiments, for the short-term template repository 154 and the long-term template repository 152, the object tracking system 100 includes a separate feature extractor (e.g., a trained feature extractor) to extract features and/or embeddings from one or more images. In certain embodiments, the object detection object 100 stores the extracted features and/or image crops in the template repository 150. In certain embodiments, the object tracking system 100 uses a first feature extractor for a first type of templates (e.g., long-term templates) and uses a second feature extractor for a second type of templates (e.g., short-term templates). In some embodiments, the first feature extractor is different from the second feature extractor. In certain embodiments, the first feature extractor is the same as the second feature extractor. In some embodiments, an image embedding, also referred to as an embedding, refers to a lower dimensional representation of an image, such as a vector representing the image. In some embodiments, extracted features are the same as extracted embeddings. In certain embodiments, extracted features are represented by embeddings (e.g., vector representations). According to certain embodiments, the fusion and quality predictor 140 generates, for each image frame or at least a part of the image frames, the tracker output 145 based at least in part on the SOT output 114, one or more MOT detected objects 116, one or more confidence scores corresponding the SOT output 114 and the one or more MOT detected objects 116, a distance between the SOT output 114 and a SOT output of one or more previous frames, one or more SOT outputs from the previous frames, a distance between the SOT output 114 and one or more templates in the template repository 150, and/or the like. In some embodiments, the fusion and quality predictor 140 evaluates for an image frame, whether the SOT output 114 matches a detected object 116 of the same track ID (e.g., the initial track ID, track ID = 1) of the region MOT 130, for example, based on IOU (intersection of union) of two bounding boxes above a certain threshold.

In some embodiments, the fusion and quality predictor 140 determines the IOU between the SOT output 114 and the MOT detected object 116. In certain embodiments, if the determined IOU is above the certain IOU threshold, the fusion and quality predictor 140 can add the SOT output 114 to the template repository 150 and/or the short-term template repository 152. In some embodiments, the fusion and quality predictor 140 determines feature similarity between the SOT output 114 and the MOT detected object 116. In certain embodiments, the fusion and quality predictor 140 determines whether feature similarity meets one or more criteria between the number of matching features between one or more SOT features in and/or extracted from the SOT output 114 and one or more MOT features in and/or extracted from the MOT output 116.

In some embodiments, if the SOT output 114 does not match the detected object 116, the fusion and quality predictor 140 evaluates the SOT output 114 based on one or more SOT criteria (e.g., a number of factors, heuristics, etc.), for example, such as criteria on confidence, distance from the previous frame, distance from one or more templates in the template repository 150, and/or the like. In certain embodiments, the one or more SOT criteria includes criteria on confidence score, a distance of the SOT output 114 from a SOT output in the previous frame, a distance of the SOT output 114 from one or more templates in the template repository 150, and/or the like. In some embodiments, if the SOT output 114 meets the one or more SOT criteria, the system sets the tracker output 145 as the SOT output 114.

In some embodiments, if the SOT output 114 does not match the detected object 116 by the MOT tracker 130 and if the detected object 116 (e.g., the detected object 116 with the initial track ID) meets one or more MOT criteria, the fusion and quality predictor 140 can set the detected object 116 as the tracker output 145. In certain embodiments, if the SOT output 114 does not match the detected object 116 by the MOT tracker 130, if the SOT output 114 does not meet the one or more SOT criteria, and if the detected object 116 (e.g., the detected object 116 with the initial track ID) meets one or more MOT criteria, the fusion and quality predictor 140 can set the detected object 116 as the tracker output 145. In some embodiments, the one or more MOT criteria includes criteria on confidence score, distance from a SOT output in the previous frame, distance from one or more templates in the template repository 150, and/or the like. In certain embodiments, if both the SOT output 114 does not meet the one or more SOT criteria and the MOT output 116 does not meet the one or more MOT criteria, the fusion and quality predictor 140 can set the tracker output 145 is as object-not-found.

According to some embodiments, the fusion and quality predictor 140 is configured to add, update, and/or remove templates from the template repository 150. In certain embodiments, for each frame (e.g., one image of a sequence of images) or at least a part of frames, if a SOT identified object (e.g., corresponding to image potion in a bounding box, an image portion) is confident enough (e.g., above a certain threshold) or if the SOT identified object matches with an object identified by the MOT tracker 130 (e.g., a region MOT), the SOT identified object and/or the associated image portion (e.g., an image region, a portion of an image) is identified as a template and/or added to the short term template repository 154. In some embodiments, the fusion and quality predictor 140 generates a tracker output 145 based at least in part on the output from the SOT tracker 120 and/or the output from the MOT tracker 130. For example, if the identified object 114A matches the identified object 116A, the fusion and quality predictor 140 generates a template corresponding to the identified object 116 and/or stores the template to the template library 150 and/or the short-term template library 154.

According to certain embodiments, the object tracking system 100 includes a template update module 165 to update the template repository 150 and update the SOT tracker 120. In some embodiments, the template update module 165 performs a template update if the image embedding for the SOT output 114 (e.g., the SOT identified object, the object 114A) is similar to the template embeddings in both the short-term template repository 154 and the long-term template repository 152, for example, to prevent update polluting the tracking model with wrong target object (e.g., wrong target appearance). In certain embodiments, template update module 165 includes different implementations (e.g., implementations of strategies), for example, to strengthen or loosen the criteria for updating templates. In some embodiments, the object tracking system 100 can include a criterion on capturing the target object (e.g., target appearance) change in time and a criterion on not polluting the model with wrong target object (e.g., target appearance). In certain embodiments, the template update module 165 can include a criterion on appearance change in identifying new templates.

In certain embodiments, the one or more templates in the template repository 150 are used for the tracking model updates. In some embodiments, the one or more templates in the template repository 150 are weighted based on their recency (e.g., during training). In certain embodiments, a template in the long-term repository 152 is higher than a template in the short-term repository 154. In some embodiments, a most recent template in the long-term repository 152 is higher than a most recent template in the short-term repository 154. In some embodiments, the template update module 165 assigns one or more weights to the one or more templates. In certain embodiments, the template update module 165 may assign a weight to a new template based at least in part on an appearance similarity.

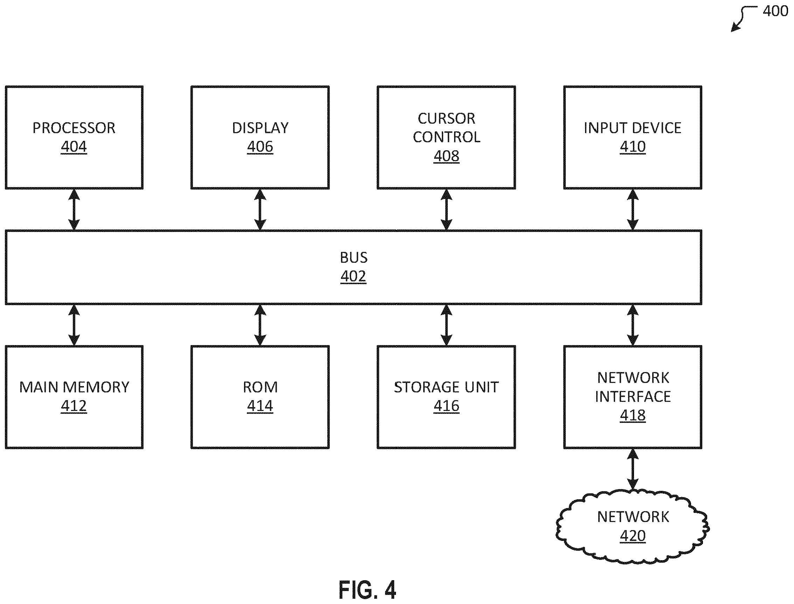

According to some embodiments, the object tracking system 100 includes a retargeting module 160 configured to receive one or more user inputs, for example, via a user interface 170. In some examples, the user interface 170 includes a graphical user interface (GUI), which can be displayed on a display of a computing device (e.g., display 406 of Figure 4). In some examples, the GUI 170 may be an animated graphical user interface which is updated (e.g., animated) based on methods provided herein. For example, the GUI may be updated according to techniques illustrated and/or described with respect to at least Figure 1, Figure 2A, Figure 2B, and/or Figure 3.

In certain embodiments, when retargeting happens, the short-term template repository 154 is emptied, reinitialized, and/or reset. For example, when retargeting happens, it means the SOT tracker 120 has already lost the target and the short-term template repository 154 may be contaminated with wrong template (e.g., embeddings). In some embodiments, the template update module 165 and/or the object tracking system 100 can generate a retargeting template 152B based at least in part on the user input (e.g., a click, a drawn bounding box, etc.). In certain embodiments, the retargeting template 152B is added to the long-term template repository 152.

In some embodiments, the object tracking system 100 uses one or more templates in the long-term template repository 152 and data augmentations to update the SOT tracker 120 and/or train the tracker model (e.g., the online tracker model). In certain embodiments, the object tracking system 100 can reset or configure the SOT tracker 120 using the retargeting template 152B. In some embodiments, the object tracking system 100 can reset or configure the MOT tracker 130 using the retargeting template 152B. In certain embodiments, the object tracking system 100 uses the retargeting template to predict new target appearance for the target object. In some embodiments, the SOT tracker 120 and/or the object tracking system 100 assigns a first weight to the initial template 152A and a second weight to the retargeting template 152B. In certain embodiments, the second weight is higher than the first weight.

In some embodiments, the repository 107 can include one or more templates (e.g., positive templates, negative templates, long-term templates, short-term templates), one or more confidence scores, one or more input images, one or more model outputs, one or more regions, one or more extracted features, one or more models, and/or the like. The repository 107 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In certain embodiments, various components in the object tracking system 100 can interact with one another via a software interface. In some embodiments, a software interface includes an application programming interface (API), a web service interface, retrieving information from a file, retrieving information from a data repository, and/or the like. In some cases, various components in the object tracking system 100 can execute software or firmware stored in non-transitory computer-readable medium to implement various processing steps. Various components and processors of the object tracking system 100 can be implemented by one or more computing devices including, but not limited to, circuits, a computer, a cloud-based processing unit, a processor, a processing unit, a microprocessor, a mobile computing device, and/or a tablet computer. In some cases, various components of the object tracking system 100 (e.g., the SOT tracker 120, the MOT tracker 130, the fusion and quality predictor 140, the retargeting module 160, the template update module 165, etc.) can be implemented on a shared computing device. Alternatively, a component of the object tracking system 100 can be implemented on multiple computing devices. In some implementations, various modules and components of the object tracking system 100 can be implemented as software, hardware, firmware, or a combination thereof. In some cases, various components of the object tracking system 100 can be implemented in software or firmware executed by a computing device.

Various components of the object tracking system 100 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

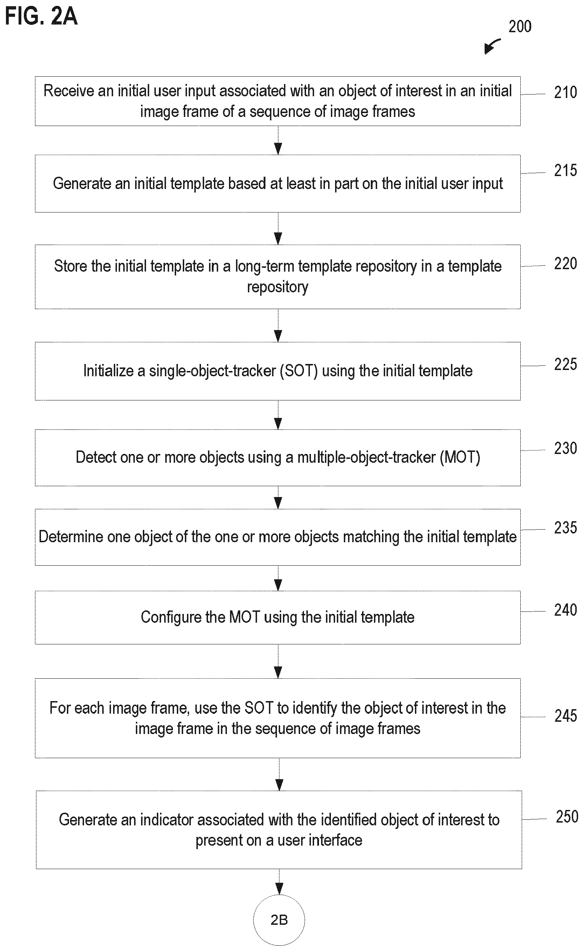

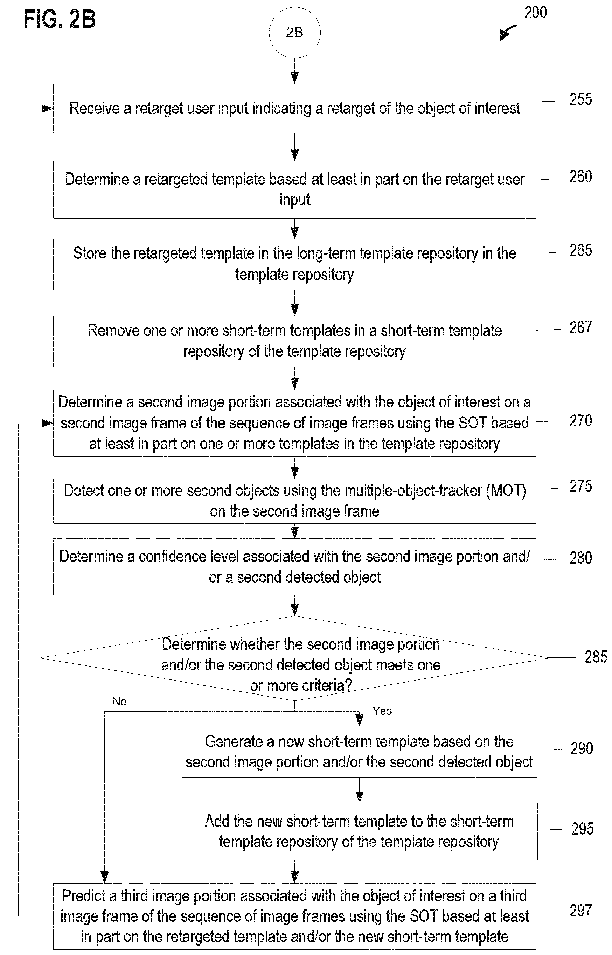

Figures 2A and 2B, collectively, illustrate a simplified diagram showing a method 200 for object tracking according to certain embodiments of the present disclosure. This diagram is merely an example. One of ordinary skill in the art would recognize many variations, alternatives, and modifications. The method 200 for object tracking includes processes 210, 215, 220, 225, 230, 235, 240, 245, 250, 255, 260, 265, 267, 270, 275, 280, 285, 290, 295, and 297. Although the above has been shown using a selected group of processes for the method 200 for object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 400). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, the system receives an initial user input associated with an object of interest in an initial image frame of a sequence of image frames. In certain embodiments, a user input is received via a user interface and/or a software interface. In some embodiments, the user input is a drawn bounding box. In certain embodiments, the user input is a click, for example, on the initial image frame.

In some examples, users (e.g., users 180 of FIG. 1) can be prompted to provide the user input. In some embodiments, the users can be prompted to provide the user input at regular intervals. In some embodiments, the users 180 can be prompted to provide feedback at irregular intervals. In some embodiments, the users 180 can provide feedback without being prompted (e.g., between adjacent prompting instances, before a prompting instance has occurred, and/or after a prompting instance has occurred).

In certain embodiments, the bounding box is a closed shape. In some examples, the bounding box is a regular polygon, such as a circle, square, rectangle, diamond, etc. In some examples, the bounding box is an irregular polygon (e.g., a shape that does not have equal sides or angles). Examples of regular and/or irregular polygons should be recognized by those of ordinary skill in the art.

According to certain embodiments, at process 215, the system generates an initial template based at least in part on the initial user input. In some embodiments, the initial template is the image portion in the bounding box of the initial user input. In certain embodiments, the initial template is associated with metadata, for example, time (e.g., temporal) and/or location (e.g., geographical) information related to the initial image frame and/or the image portion. In some examples, the location metadata may include coordinates, such as a latitude value and/or longitude value, rectangular coordinates, and/or polar coordinates.

According to some embodiments, at process 220, the system stores the initial template in a long-term template repository (e.g., the long-term template repository 152) in a template repository (e.g., the template repository 150). In certain embodiments, image templates are classified into two or more categories (e.g., types), for example, templates generated based on model outputs, templated generated based on user inputs. In some embodiments, templates generated based on model outputs are referred to as short-term templates. In certain embodiments, templates generated based on user inputs are referred to as long-term templates. For example, the initial template generated based on the initial user input is a long-term template. In some embodiments, each template is associated with a weight when the template is used for object detection. In certain embodiments, a short-term template has a weight lower than a weight of a long-term template.

In some embodiments, the template repository includes two or more template repositories and each template repository includes templates in a category, for example, a template category of templates generated based on model outputs, a template category of templates generated based on user inputs. In some embodiments, short-term templates (e.g., templates generated based on model outputs) are stored in a short-term template repository (e.g., the short-term template repository 154) of the template repository. In certain embodiments, long-term templates (e.g., templates generated based on user inputs) are stored in the long-term template repository.

According to certain embodiments, at process 225, the system initializes a single-object-tracker (SOT) (e.g., the SOT 120) using the initial template. In some embodiments, the SOT is initialized and uses the initial template to detect the object of interest. In certain embodiments, the SOT uses a template matching model. In some embodiments, the SOT extracts features for the initial template and uses the template matching model with the extracted features.

According to some embodiments, at process 230, the system detects one or more objects using a multiple-object-tracker (MOT) (e.g., the MOT 130) of the initial image frames and/or one or more subsequent image frames. In certain embodiments, the MOT uses a trained object detection model. In some embodiments, the MOT uses a deep learning model for object detections. In certain embodiments, the MOT uses an object detection model that is trained to detect generic objects (e.g., objects of one or more classes). In some embodiments, the MOT includes an object detection model trained for detecting a specific class of objects (e.g., vehicles).

In certain embodiments, the MOT is a region MOT that is configured to detect one or more objects in a specific region in an image frame. In some embodiments, the specific region is determined based on the initial template's identified position in the image frame. In certain examples, the specific region (e.g., search region) has a predetermined size. In some examples, the specific region has the identified initial template position as its center. In certain embodiments, the specific region relates to the identified object of interest by the SOT. In some embodiments, the specific region has the object of interest as its center. In certain embodiments, the MOT includes an association model to identify associated objects across two or more image frames (e.g., two or more images).

According to certain embodiments, at process 235, the system determines that one object of the one or more detected objects matches the initial template. In some embodiments, at process 240, the system configures the MOT using the initial template, for example, assigning a tracking identifier to the matched object.

According to certain embodiments, at process 245, for each frame, the system uses the SOT to identify the object of interest in the image frame in the sequence of image frames. In some embodiments, for each frame, the system uses the SOT and one or more templates in the template library to identify the object of interest in the image frame in the sequence of image frames. In certain embodiments, the system uses the SOT and one or more templates in the template library to identify the object of interest in the subsequent frame in the sequence of image frames. In some embodiments, the one or more templates in the template library are associated with one or more weights, such that the SOT uses the one or more templates and associated weights to detect the object of interest in the image frame and/or to predict the object of interest in the subsequent image frame. In certain embodiments, the weight associated with the latest long-term template is higher than the weight associated with the latest short-term template. In some embodiments, the weight is higher for a template generated from a second image frame than a template generated from a first image frame, if the second image frame is later in sequence.

In certain embodiments, the system uses the identified object of interest in an image frame and a motion model to predict a search region for a subsequent image frame. In some embodiments, the SOT uses the predicted search region and one or more templates (e.g., weighted templates) to identify the object of interest in the subsequent image frame. In some embodiments, the SOT uses a similarity model (e.g., a template matching model) to identify and/or locate an image portion associated with the object of interest in the image frame. In certain embodiments, the SOT uses one or more similarity models (e.g., an appearance model).

According to some embodiments, at process 250, the system generates an indicator associated with the identified object of interest to present on a user interface (e.g., the user interface 170 of Figure 1). In certain embodiments, the indicator indicates a confidence level (e.g., a confidence level of a detection) associated with the identified object of interest. In some embodiments, an indicator includes a first characteristic representing a high confidence level and a second characteristic representing a low confidence level. In certain embodiments, the indicator is in a closed shape (e.g., a rectangle, a circle, an oval, an irregular polygon, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold (e.g., previously specified by a user, developer, policy, manufacturer, organization, etc.).

According to certain embodiments, at process 255, the system receives a retarget user input indicating a retarget of the object of interest. In some embodiments, a user is prompted to provide the user input. In some embodiments, the user is prompted to provide the user input at regular intervals. In some embodiments, the user is prompted to provide the user input in response to an output of a process. In some embodiments, the user is prompted to provide the user input at irregular intervals. In some embodiments, the user provides feedback without being prompted.

In some embodiments, the retarget user input is a drawn bounding box (e.g., a closed shape, which may be a regular polygon or an irregular polygon) or a selection (e.g., click). In certain embodiments, at process 267, the system removes one or more templates in a short-term template repository of the template repository. In some embodiments, when retargeting happens, the short-term template repository is emptied, and/or reset. For example, when retargeting happens, it means the SOT has already lost the target and the short-term template repository may be contaminated with wrong template (e.g., embeddings). In some embodiments, an online training step for the SOT is triggered with the user providing a retargeting template via a user input (e.g., a click) and/or receiving a retarget user input.

According to some embodiments, at process 260, the system determines a retargeted template based at least in part on the retarget user input. In certain embodiments, at process 265, the system stores the retargeted template in the long-term template repository in the template repository. In some embodiments, the system uses one or more templates in the long-term template repository and data augmentations to update the SOT and/or train the SOT (e.g., the online tracker model). In certain embodiments, the system uses the retargeting template to predict new target appearance for the object of interest (e.g., target object). In some embodiments, the system assigns a first weight to the initial template and a second weight to the retargeting template. In certain embodiments, the second weight is higher than the first weight.

According to certain embodiments, at process 270, the system determines a second image portion associated with the object of interest on a second image frame of the sequence of image frames using the SOT based on one or more templates in the template repository. In some embodiments, the system determines a second image portion associated with the object of interest on a second image frame of the sequence of image frames using the SOT based at least in part on the retargeted template. In some embodiments, the system determines a second image portion associated with the object of interest on a second image frame of the sequence of image frames using the SOT based at least in part on the retargeted template and one or more other templates in the template library. In certain embodiments, the retargeted template has a higher weight than the one or more other templates, for example, one or more other templates in the long-term template repository.

In certain embodiments, the system uses the identified object of interest in an image frame and a motion model to predict a search region for a subsequent image frame. In some embodiments, the SOT uses the predicted search region and one or more templates (e.g., weighted templates) to identify the object of interest in the subsequent image frame. In some embodiments, the SOT uses a similarity model (e.g., a template matching model) to identify and/or locate an image portion associated with the object of interest in the image frame. In certain embodiments, the SOT uses one or more similarity models (e.g., an appearance model).

In some embodiments, the system determines one or more similarities (e.g., similarity metrics) between a template and the identified object of interest. In some embodiments, the system determines a similarity metric (e.g., a distance) between the template and the identified object of interest. In certain embodiments, the system determines the similarity metric using a similarity machine-learning model, for example, a regression similarity learning model, a classification similarity learning model, a ranking similarity learning model, an appearance model, and/or the like. In some embodiments, the system determines the similarity metric between the template and the identified object of interest using a Siamese neural network and/or the like. In certain embodiments, the system determines a similarity distance between the template and the identified object of interest.

According to some embodiments, the system determines a confidence level (e.g., a confidence score) for the identified object of interest and/or the corresponding image portion. In some embodiments, the system determines a confidence level for the identified object of interest and/or the corresponding image portion based at least in part on the one or more determined similarities.

According to some embodiments, at process 275, the system detects one or more second objects using the multiple-object-tracker (MOT) on the second image frame. In certain embodiments, the MOT detects the one or more second objects in a search region that is determined based on the SOT output. In some embodiments, the system determines the search region based on the SOT output in an image frame prior to the second image frame and a motion model.

According to certain embodiments, at process 280, the system determines a confidence level (e.g., a confidence score) associated with the second image portion and/or one or more detected second objects. In some embodiments, the confidence level is determined based at least in part on the one or more detected second objects by the MOT. In certain embodiments, the confidence level is determined by the SOT.

According to some embodiments, at process 285, the system determines whether the second image portion and/or the one or more detected second objects meet one or more criteria. In certain embodiments, the criteria include a criterion of similarity of the second image portion and/or its embedding and the one or more detected second objects. In some embodiments, the criterion of similarity includes a similarity threshold. In certain embodiments, the criteria include a criterion of confidence level (e.g., confidence score) above a threshold (e.g., 50%, 60%, 80%, etc.). In some embodiments, the criteria include a criterion of confidence level above a predetermined threshold.

According to certain embodiments, at process 290, if the second image portion and/or the detected second object meets the one or more criteria, the system generates a new short-term template based on the second image portion. In some embodiments, the new short-term template includes one or more features and/or embeddings extracted from the second image portion. In certain embodiments, extracted features are the same as extracted embeddings. In some embodiments, extracted features are represented by embeddings (e.g., vector representations). In certain embodiments, at process 295, the system adds the new short-term template to the short-term template repository of the template repository. In some embodiments, the system assigns a new weight associated with the new short-term template. In certain embodiments, the weight of the new short-term template is higher than one or more existing short-term templates, for example, the one or more templates in the short-term template repository.

According to certain embodiments, at process 297, the system predicts a third image portion associated with the object of interest on a third image frame of the sequence of image frames using the SOT based at least in part on the retargeted template and/or the new short-term template. In some embodiments, the SOT uses a similarity model (e.g., a template matching model) to identify and/or locate an image portion associated with the object of interest in the image frame. In certain embodiments, the SOT uses one or more similarity models (e.g., an appearance model). In some embodiments, the described process can improve computer-vision based tracking performance by avoiding distractions (e.g., tracking the incorrect object).

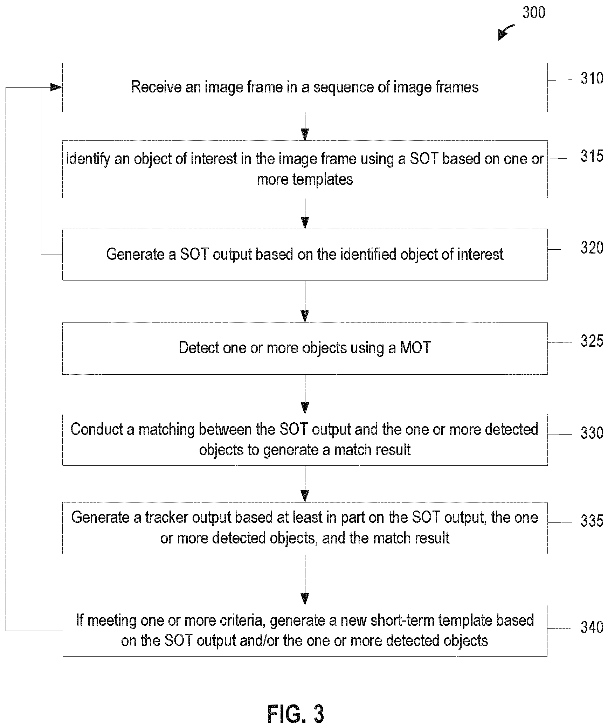

Figure 3 collectively is a simplified diagram showing a method 300 for object tracking according to certain embodiments of the present disclosure. This diagram is merely an example. One of ordinary skill in the art would recognize many variations, alternatives, and modifications. The method 300 for object tracking includes processes 310, 315, 320, 325, 330, 335, and 340. Although the above has been shown using a selected group of processes for the method 300 for object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 400). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives an image frame in a sequence of image frames. In some embodiments, the image frame is received from an image sensor (e.g., a still camera, a video camera, a satellite). In certain embodiments, at process 315, the system identifies an object of interest in the image frame using a single-object tracker (SOT or SOT tracker) based upon one or more templates associated with the object of interest in a template repository (e.g., the template repository 150). In some embodiments, at process 320, the system generates a SOT output based on the identified object of interest. In certain examples, the SOT output is an image portion. In certain embodiments, the system goes back to the process 310 to process the next image frame in the sequence of image frames.

In some embodiments, the SOT tracker includes a template feature extraction model, search region feature extraction model, and/or similarity model. In certain embodiments, the template feature extraction model can extract features (e.g., target characteristics) from one or more templates. In some embodiments, the template feature extraction model can extract embeddings, also referred to as low-dimensional representations (e.g., vectors) from the one or more templates. In some embodiments, the features are the same as or similar to the embeddings (e.g., the features are represented by the embeddings). In some embodiments, the template feature extraction model can extract features and/or embeddings from the one or more templates.

In certain embodiments, the search region feature extraction model can extract features (e.g., target characteristics, background characteristics) from the one or more templates within a search region. In some embodiments, a search region is a region of a certain size (e.g., with 100 square meters) containing an identified target of interest. In certain embodiments, a search region is a region of a certain size (e.g., with 100 square meters) with the identified target of interest at the center. In some embodiments, the search region feature extraction model can extract embeddings from the one or more templates. In some embodiments, the search region feature extraction model can extract features and/or embeddings from the one or more templates.

In certain embodiments, the SOT tracker and/or the similarity model determines one or more similarities (e.g., similarity metrics) between a template and a detected object. In some embodiments, the SOT tracker and/or the similarity model determines a similarity metric (e.g., a distance) between the template and a detected object. In certain embodiments, the SOT tracker and/or the similarity model determines the similarity metric using a similarity machine-learning model, for example, a regression similarity learning model, a classification similarity learning model, a ranking similarity learning model, an appearance model, and/or the like. In some embodiments, the SOT tracker and/or the similarity model determines the similarity metric between the template and a detected object using a Siamese neural network and/or the like. In certain embodiments, the SOT tracker and/or the similarity model determines a similarity distance between the template and a detected object.

In some embodiments, the SOT tracker can use a motion model to predict a search region in the image frame, for example, based on a previous image frame. In certain embodiments, the SOT tracker and/or the similarity model can detect an object of interest (e.g., finding a matching bounding box) using one or more templates in the template repository. In some embodiments, the SOT tracker can generate the SOT output, for example, including embeddings extracted from an image and a template and/or extracted features.

According to certain embodiments, at process 325, the system detects one or more objects in the image frame using a multiple-obj ect tracker (MOT). In some embodiments, the MOT includes a machine-learning model. In certain embodiments, the one or more detected objects are corresponding to one or more track identifiers (IDs), including a detected object having a track ID corresponding to the object of interest. In some embodiments, the MOT tracker includes a generic object detector and a multi-object association module. In some embodiments, the generic object detector is trained to identify generic objects, for example, objects of multiple classes. In certain embodiments, the multi-object association module can produce associations between detections (e.g., detected objects). In some embodiments, the multi-object association module can determine associations of objects between frames (e.g., image frames).

In certain embodiments, the MOT tracker may run at a reduced frequency (e.g., every 5 or 10 frames) and/or run on demand, for example, to improve runtime efficiency. In some embodiments, the region MOT tracker may be triggered by one or more conditions (e.g., a demand). In certain embodiments, the one or more conditions include, for example, when retargeting is triggered, when the confidence score corresponding the SOT output is low, when the movement between the current SOT output (e.g., the SOT output 114B) and the previous SOT output (e.g., the SOT output 114A) is large, and/or the like.

According to some embodiments, at process 330, the system conducts a matching (e.g., an image patching) between the SOT output and the one or more detected objects to generate a match result. In certain embodiments, at process 335, the system generates a tracker output based at least on the SOT output, the one or more detected objects, and the match result. In some embodiments, if meeting one or more criteria, at process 340, the system generates a new template (e.g., a new short-term template) based on the SOT output and/or the one or more detected objects. In certain embodiments, the described process can improve computer-vision based tracking performance by avoiding distractions (e.g., tracking the incorrect object).

In certain embodiments, the system conducts an image matching by determining the IOU (interaction of union) between the SOT output and the detected object (e.g., a selected MOT detected object, a MOT detected object with a tracker ID for the object of interest). In certain embodiments, if the determined IOU is above the certain IOU threshold such that a match is found, the system can add the SOT output to the template repository and/or the short-term template repository. In some embodiments, the system determines feature similarity between the SOT output and the MOT detected object. In certain embodiments, the system determines whether feature similarity meets one or more criteria between the number of matching features between one or more SOT features in and/or extracted from the SOT output and one or more MOT features in and/or extracted from the MOT output.

In some embodiments, if the SOT output does not match the detected object, the system evaluates the SOT output based on one or more SOT criteria (e.g., a number of factors, heuristics, etc.), for example, such as criteria on confidence, distance from the previous frame, distance from one or more templates in the template repository, and/or the like. In certain embodiments, the one or more SOT criteria includes criteria on confidence score, a distance of the SOT output from a SOT output in the previous frame, a distance of the SOT output from one or more templates in the template repository, and/or the like. In some embodiments, if the SOT output meets the one or more SOT criteria, the system sets the tracker output as the SOT output. In certain embodiments, if the SOT output meets the one or more SOT criteria, the system adds the SOT output as a new template (e.g., a new short-term template).

In some embodiments, if the SOT output does not match the detected object by the MOT tracker and if the detected object (e.g., the detected object having the track ID of the object of interest) meets one or more MOT criteria, the system can set the tracker output as the detected object. In some embodiments, if the SOT output does not match the detected object by the MOT tracker and if the detected object meets one or more MOT criteria, the system can add the detected object as a new template (e.g., a new short-term template). In certain embodiments, if the SOT output does not match the detected object by the MOT tracker, if the SOT output does not meet the one or more SOT criteria, and if the detected object (e.g., the detected object 116 with the initial track ID) meets one or more MOT criteria, the system can set the detected object as the tracker output. In some embodiments, the one or more MOT criteria includes criteria on confidence score, distance from a SOT output in the previous frame, distance from one or more templates in the template repository, and/or the like. In certain embodiments, if both the SOT output does not meet the one or more SOT criteria and the MOT output does not meet the one or more MOT criteria, the system can set the tracker output as object-not-found.

Figure 4 is a simplified diagram showing a computing system for implementing a system 400 for object tracking in accordance with at least one example set forth in the disclosure. This diagram is merely an example, which should not unduly limit the scope of the claims. One of ordinary skill in the art would recognize many variations, alternatives, and modifications.

The computing system 400 includes a bus 402 or other communication mechanism for communicating information, a processor 404, a display 406, a cursor control component 408, an input device 410, a main memory 412, a read only memory (ROM) 414, a storage unit 416, and a network interface 418. In some embodiments, some or all processes (e.g., steps) of the methods 200 and/or 300 are performed by the computing system 400. In some examples, the bus 402 is coupled to the processor 404, the display 406, the cursor control component 408, the input device 410, the main memory 412, the read only memory (ROM) 414, the storage unit 416, and/or the network interface 418. In certain examples, the network interface is coupled to a network 420. For example, the processor 404 includes one or more general purpose microprocessors. In some examples, the main memory 412 (e.g., random access memory (RAM), cache and/or other dynamic storage devices) is configured to store information and instructions to be executed by the processor 404. In certain examples, the main memory 412 is configured to store temporary variables or other intermediate information during execution of instructions to be executed by processor 404. For examples, the instructions, when stored in the storage unit 416 accessible to processor 404, render the computing system 400 into a special-purpose machine that is customized to perform the operations specified in the instructions. In some examples, the ROM 414 is configured to store static information and instructions for the processor 404. In certain examples, the storage unit 416 (e.g., a magnetic disk, optical disk, or flash drive) is configured to store information and instructions.

In some embodiments, the display 406 (e.g., a cathode ray tube (CRT), an LCD display, or a touch screen) is configured to display information to a user of the computing system 400. In some examples, the input device 410 (e.g., alphanumeric and other keys) is configured to communicate information and commands to the processor 404. For example, the cursor control component 408 (e.g., a mouse, a trackball, or cursor direction keys) is configured to communicate additional information and commands (e.g., to control cursor movements on the display 406) to the processor 404.

According to certain embodiments, a method for object tracking is provided. The method includes: receiving an image frame in a sequence of image frames; identifying an object of interest in the image frame using a single-object tracker (SOT) based upon one or more templates associated with the object of interest in a template repository; generating a SOT output based on the identified object of interest; detecting one or more objects in the image frame using a multiple-object tracker (MOT), the MOT including a machine-learning model; conducting a matching between the SOT output and each detected object of the one or more detected objects to generate a match result; and generating a tracker output based at least in part on the SOT output, the one or more detected objects, and the match result; wherein the method is performed using one or more processors. For example, the method is implemented according to at least Figure 1, Figure 2A, Figure 2B, and/or Figure 3.

In some embodiments, the match result indicates a match between the SOT output and one detected object of the one or more detected objects, wherein the generating a tracker output comprises generating the tracker output as the SOT output. In certain embodiments, the method further includes generating a new template based on the SOT output; and adding the new template to the template repository. In some embodiments, the adding the new template to the template repository comprises adding the new template to a short-term template repository of the template repository. In certain embodiments, the method further includes assigning a new weight associated with the new template; wherein the new weight is higher than a weight associated with one of the one or more templates in the template repository.

In certain embodiments, the conducting a matching includes: determining an intersection of union (IOU) between the SOT output and each detected object of the one or more detected objects; determining whether the IOU is lower than an IOU threshold; and identifying a detected object of the one or more detected objects with a corresponding IOU lower than the IOU threshold. In some embodiments, the match result indicates no match being found; wherein the method further comprises selecting a detected object from the one or more detected objects based on an association with a previous detected object corresponding to one template of the one or more templates; wherein a confidence score associated with the selected detected object is higher than a threshold; wherein the generating a tracker output comprises generating the tracker output as the selected detected object. In certain embodiments, the method further includes generating a new template based on the selected detected object; and adding the new template to the template repository.

In some embodiments, the adding the new template to the template repository comprises adding the new template to a short-term template repository of the template repository. In certain embodiments, the method further includes receiving a user input associated with an identified image portion on an initial image frame of the sequence of image frames; generating an initial template based at least in part on the first identified image portion; and initializing the SOT based at least in part on the initial template.

According to certain embodiments, a system for object tracking is provided. The system comprising at least one processor and at least one memory storing instructions that, when executed by the at least one processor, causes the system to perform a set of operations. The set of operations include: receiving an image frame in a sequence of image frames; identifying an object of interest in the image frame using a single-obj ect tracker (SOT) based upon one or more templates associated with the object of interest in a template repository; generating a SOT output based on the identified object of interest; detecting one or more objects in the image frame using a multiple-object tracker (MOT), the MOT including a machine-learning model; conducting a matching between the SOT output and each detected object of the one or more detected objects to generate a match result; and generating a tracker output based at least in part on the SOT output, the one or more detected objects, and the match result. For example, the system is implemented according to at least Figure 1, Figure 2A, Figure 2B, and/or Figure 3.

In some embodiments, the match result indicates a match between the SOT output and one detected object of the one or more detected objects, wherein the generating a tracker output comprises generating the tracker output as the SOT output. In certain embodiments, the set of operations further includes generating a new template based on the SOT output; and adding the new template to the template repository. In some embodiments, the adding the new template to the template repository comprises adding the new template to a short-term template repository of the template repository. In certain embodiments, the set of operations further includes assigning a new weight associated with the new template; wherein the new weight is higher than a weight associated with one of the one or more templates in the template repository.

In certain embodiments, the conducting a matching includes: determining an intersection of union (IOU) between the SOT output and each detected object of the one or more detected objects; determining whether the IOU is lower than an IOU threshold; and identifying a detected object of the one or more detected objects with a corresponding IOU lower than the IOU threshold. In some embodiments, the match result indicates no match being found; wherein the method further comprises selecting a detected object from the one or more detected objects based on an association with a previous detected object corresponding to one template of the one or more templates; wherein a confidence score associated with the selected detected object is higher than a threshold; wherein the generating a tracker output comprises generating the tracker output as the selected detected object. In certain embodiments, the set of operations further includes generating a new template based on the selected detected object; and adding the new template to the template repository.

In some embodiments, the adding the new template to the template repository comprises adding the new template to a short-term template repository of the template repository. In certain embodiments, the set of operations further includes receiving a user input associated with an identified image portion on an initial image frame of the sequence of image frames; generating an initial template based at least in part on the first identified image portion; and initializing the SOT based at least in part on the initial template.

According to certain embodiments, a method for object tracking is provided. The method includes: receiving an image frame in a sequence of image frames; identifying an object of interest in the image frame using a single-object tracker (SOT) based upon one or more templates associated with the object of interest in a template repository; generating a SOT output based on the identified object of interest; detecting one or more objects in the image frame using a multiple-object tracker (MOT); and conducting a matching between the SOT output and each detected object of the one or more detected objects to generate a match result. In some embodiments, the conducting a matching includes: determining an intersection of union (IOU) between the SOT output and each detected object of the one or more detected objects; determining whether the IOU is lower than an IOU threshold; and identifying a detected object of the one or more detected objects with a corresponding IOU lower than the IOU threshold. In some embodiments, the method further includes generating a tracker output based at least in part on the SOT output, the one or more detected objects, and the match result, wherein the method is performed using one or more processors. For example, the method is implemented according to at least Figure 1, Figure 2A, Figure 2B, and/or Figure 3.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method (300) for object tracking, the method comprising:
receiving (310) an image frame in a sequence of image frames;
identifying (315) an object of interest in the image frame using a single-object tracker (SOT) based upon one or more templates associated with the object of interest in a template repository;
generating (320) a SOT output based on the identified object of interest;
detecting (325) one or more objects in the image frame using a multiple-object tracker (MOT), the MOT including a machine-learning model;
conducting (330) a matching between the SOT output and each detected object of the one or more detected objects to generate a match result; and
generating (335) a tracker output based at least in part on the SOT output, the one or more detected objects, and the match result;
wherein the method is performed using one or more processors.

2. The method of claim 1, wherein the match result indicates a match between the SOT output and one detected object of the one or more detected objects, wherein the generating a tracker output comprises generating the tracker output as the SOT output.

3. The method of claim 2, further comprising:
generating a new template based on the SOT output; and
adding the new template to the template repository.

4. The method of claim 3, wherein the adding the new template to the template repository comprises adding the new template to a short-term template repository of the template repository.

5. The method of claim 3 or claim 4, further comprising:
assigning a new weight associated with the new template;
wherein the new weight is higher than a weight associated with one of the one or more templates in the template repository.

6. The method of any preceding claim, wherein the conducting a matching includes:
determining an intersection of union (IOU) between the SOT output and each detected object of the one or more detected objects;
determining whether the IOU is lower than an IOU threshold; and
identifying a detected object of the one or more detected objects with a corresponding IOU lower than the IOU threshold.

7. The method of claim 1, wherein the match result indicates no match being found; wherein the method further comprises selecting a detected object from the one or more detected objects based on an association with a previous detected object corresponding to one template of the one or more templates;
wherein a confidence score associated with the selected detected object is higher than a threshold;
wherein the generating a tracker output comprises generating the tracker output as the selected detected object.

8. The method of claim 7, wherein the method further comprises:
generating a new template based on the selected detected object; and
adding the new template to the template repository.

9. The method of claim 8, wherein the adding the new template to the template repository comprises adding the new template to a short-term template repository of the template repository.

10. The method of any preceding claim, further comprising:
receiving a user input associated with an identified image portion on an initial image frame of the sequence of image frames;
generating an initial template based at least in part on the identified image portion; and
initializing the SOT based at least in part on the initial template.

11. A method (300) for object tracking, the method comprising:
receiving (310) an image frame in a sequence of image frames;
identifying (315) an object of interest in the image frame using a single-object tracker (SOT) based upon one or more templates associated with the object of interest in a template repository;
generating (320) a SOT output based on the identified object of interest;
detecting (325) one or more objects in the image frame using a multiple-object tracker (MOT);
conducting (330) a matching between the SOT output and each detected object of the one or more detected objects to generate a match result, wherein the conducting a matching includes:
determining an intersection of union (IOU) between the SOT output and each detected object of the one or more detected objects;
determining whether the IOU is lower than an IOU threshold; and
identifying a detected object of the one or more detected objects with a corresponding IOU lower than the IOU threshold; and
generating (335) a tracker output based at least in part on the SOT output, the one or more detected objects, and the match result,
wherein the method is performed using one or more processors.

12. A system (400) for object tracking, the system comprising:
at least one processor (404); and
at least one memory (412) storing instructions that, when executed by the at least one processor, cause the system to perform the method according to any preceding claim.
